# EUROPEAN PATENT APPLICATION

(11) **EP 4 518 182 A1**
(43) Date of publication of application: **05.03.2025**
(21) Application number: 24194576.5
(22) Date of filing: 14.08.2024
(51) Int. Cl.: H04B 7/06, H04B 7/08

(54) **BEAM MANAGEMENT**

(30) Priority: 29.08.2023 GB 202313083
(71) Applicant: Nokia Technologies Oy, 02610 Espoo (FI)
(72) Inventor: BARACCA, Paolo, Munich (DE); CAPORAL DEL BARRIO, Samantha, Aalborg (DK)
(74) Representative: Nokia EPO representatives

(57) **Abstract**

Certain examples of the present disclosure relate to apparatus (10, 110) comprising: means (11) for receiving (310), from an access node (120), configuration information (302) for configuring the apparatus to: perform Group-Based Beam Reporting, GBBR, of Layer 1 signal-to-interference-plus-noise ratio, L1-SINR, measurements, and generate at least one measurement report (303) for the GBBR of the L1-SINR measurements, wherein the at least one measurement report comprises: a first group of L1-SINR measurements (401) for a first group of beams (201), and at least one indication (304, 502_1) of whether one or more L1-SINR measurements (401_1) of the first group of L1-SINR measurements can be used as one or more L1-SINR measurements (402_1) of a second group of L1-SINR measurements (402) for a second group of beams (202); means (11) for generating, based at least in part on the configuration information, the at least one measurement report; and means for transmitting, to the access node, the at least one measurement report.

## Description

### TECHNOLOGICAL FIELD

Examples of the present disclosure relate to beam management in a wireless network. Various examples provide an apparatus, a method, and a computer program for Group-Based Beam Reporting, GBBR. Some examples, though without prejudice to the foregoing, relate to GBBR, of Layer 1 Signal-to-Interference-plus-Noise Ratio, L1-SINR, measurements.

### BACKGROUND

Conventional beam management is not always optimal. Typically, a group of beams may be selected/scheduled based on Layer 1 Reference Signal Received Power, L1-RSRP, measurements. In this regard a receiver, e.g. a User Equipment, UE, may be capable of simultaneously receiving plural beams from one or more Transmission Reception Points, TRPs. The UE may be capable of providing GBBR of L1-RSRP measurements to at least one of the TRPs. However, such L1-RSRP measurements do not take into account any inter-beam interference that UE may experience in receiving a particular group of beams.

Conventional L1-SINR measurement reporting is not always optimal. Conventional GBBR of L1-SINR measurements is not always optimal.

In some circumstances it can be desirable to provide improved beam management. In some circumstances it can be desirable to provide L1-SINR measurement reporting. In some circumstances it can be desirable to provide improved GBBR of L1-SINR measurements. In some circumstances it can be desirable to provide efficient GBBR of L1 - SINR measurements with reduced signalling overhead.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various embodiments of the invention is set out by the claims.

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to at least some examples of the disclosure there is provided an apparatus comprising:
means for receiving, from an access node, configuration information for configuring the apparatus to:
   perform Group-Based Beam Reporting, GBBR, of Layer 1 signal-to-interference-plus-noise ratio, L1-SINR, measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams;
means for generating, based at least in part on the configuration information, the at least one measurement report; and
means for transmitting, to the access node, the at least one measurement report.

According to various, but not necessarily all, examples of the disclosure there is provided a method comprising:
receiving, at an apparatus from an access node, configuration information for configuring the apparatus to:
   perform Group-Based Beam Reporting, GBBR, of Layer 1 signal-to-interference-plus-noise ratio, L1-SINR, measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams;
generating, based at least in part on the configuration information, the at least one measurement report; and
transmitting, to the access node, the at least one measurement report.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by an apparatus, cause the apparatus to perform:
receiving, from an access node, configuration information for configuring the apparatus to:
   perform Group-Based Beam Reporting, GBBR, of Layer 1 signal-to-interference-plus-noise ratio, L1-SINR, measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams;
generating, based at least in part on the configuration information, the at least one measurement report; and
transmitting, to the access node, the at least one measurement report.

According to various, but not necessarily all, examples of the disclosure there is provided an apparatus comprising:
at least one processor; and
at least one memory storing instructions that, when executed by the at least one processor, cause the apparatus at least to:
   receive, from an access node, configuration information for configuring the apparatus to:
      perform Group-Based Beam Reporting, GBBR, of Layer 1 signal-to-interference-plus-noise ratio, L1-SINR, measurements, and
      generate at least one measurement report for the GBBR of the L1-SINR measurements, wherein the at least one measurement report comprises:
         a first group of L1-SINR measurements for a first group of beams, and
         at least one indication of whether one or more L1-SINR measurements of the first group of L1-SINR measurements can be used as one or more L1-SINR measurements of a second group of L1-SINR measurements for a second group of beams;
   generate, based at least in part on the configuration information, the at least one measurement report; and
   transmit, to the access node, the at least one measurement report.

According to various, but not necessarily all, examples of the disclosure there is provided a non-transitory computer readable medium encoded with instructions that, when executed by at least one processor, causes at least the following to be performed:
receive, from an access node, configuration information for configuring the apparatus to:
   perform Group-Based Beam Reporting, GBBR, of Layer 1 signal-to-interference-plus-noise ratio, L1-SINR, measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams;
   generate, based at least in part on the configuration information, the at least one measurement report; and
   transmit, to the access node, the at least one measurement report.

The following portion of this 'Brief Summary' section describes various features that can be features of any of the examples described in the foregoing portion of the 'BriefSummary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the second group of beams comprises at least one of:
a subgroup of beams of the first group of beams; and
one or more beams that the apparatus is able to simultaneously receive.

In some but not necessarily all examples, the one or more L1-SINR measurements of a second group of L1-SINR measurements for a second group of beams are represented in the at least one measurement report via the at least one indication.

In some but not necessarily all examples, at least one indication is indicative of whether one or more L1-SINR measurements, for respective one or more beams, of the first group of L1-SINR measurements are within a threshold difference of the one or more beam's respective L1-SINR measurements for the second group of beams.

In some but not necessarily all examples, the L1-SINR measurements for the first group of beams comprise a first set of first measurement values of inter beam interference for each beam of the first group of beams due to the other beams of the first group of beams; and the L1-SINR measurements for the second group of beams comprise a second set of second measurement values of inter beam interference for each beam of the second group of beams due to the other beams of the second group of beams.

In some but not necessarily all examples, the at least one indication is indicative of whether one or more second L1-SINR measurement values for one or more beams can be represented by one or first L1-SINR measurement values for the respective one or more beams.

In some but not necessarily all examples, the apparatus further comprises means for determining a beam, of the first group of beams, which has a first L1-SINR measurement with inter beam interference from the other beams of the first group of beams that is within a threshold difference of a second L1-SINR measurement for the beam with inter beam interference from the other beams of the second group of beams; and
the at least one indication is indicative of whether the first L1-SINR measurement for the determined beam can be used as the second L1-SINR measurement for the determined beam.

In some but not necessarily all examples, the at least one measurement report comprises a second group of L1-SINR measurements for the second group of beams; and at least one of the L1-SINR measurements for the second group of beams is represented by the at least one indication.

In some but not necessarily all examples, the second group of L1-SINR measurements of the at least one measurement report comprises:
the at least one indication for representing the at least one of the L1-SINR measurements for the second group of beams; and
at least one L1-SI NR measurement value for at least one the L1-SI NR measurements for the second group of beams.

In some but not necessarily all examples, the apparatus further comprises means for determining a beam, of the first group of beams, which has a first L1-SINR measurement with inter beam interference from the other beams of the first group of beams that exceeds a threshold difference of a second L1-SINR measurement for the beam with inter beam interference from the other beams of the second group of beams; and
the second L1-SINR measurement for the determined beam is represented in the at least one measurement report via an L1-SINR measurement value for the determined beam.

In some but not necessarily all examples, the at least one indication is indicative of whether at least one of:
a plurality of L1-SINR measurements of the first group of L1-SINR measurements can be used as a plurality of L1-SINR measurements for the second group of beams; and
the L1-SINR measurements from the first group of L1-SINR measurements for beams of the second group of beams can be used as the L1-SINR measurements for the second group of beams.

In some but not necessarily all examples, the first group of beams comprises a plurality of subgroups of beams, and the at least one indication is indicative of whether L1-SINR measurements from the first group of L1-SINR measurements can be used as L1-SINR measurements for the plurality of subgroups of beams.

In some but not necessarily all examples, the at least one indication comprises at least one of the following:
an explicit indication;
a flag; and
a dedicated bit.

In some but not necessarily all examples, the at least one indication is implicit.

In some but not necessarily all examples, the at least one indication is indicative of whether L1-SINR measurements from the first group of L1-SINR measurements for the beams of the second group of beams can be used as the L1-SINR measurements for the second group of beams, and
the at least one indication is implicitly provided by configuring the at least one measurement report so as to:
report the first group of L1-SINR measurements for a first group of beams, and not report the second group of L1-SINR measurements for the second group of beams.

In some but not necessarily all examples, the apparatus further comprises means for receiving, from the access node, information indicative of a parameter for use in determining whether the one or more L1-SINR measurements of the first group of L1-SINR measurements can be used as the one or more L1-SINR measurement for the second group of beams.

In some but not necessarily all examples, the at least one measurement report further comprises one or more additional indications for indicating which one or more beams of the first group of beams causes the one or more greatest levels of inter beam interference with a given beam of the first group of beams.

In some but not necessarily all examples, the at least one measurement report further comprises, for each beam of the first group of beams, one or more additional indications for indicating which one or more beams of the first group of beams causes one or more greatest levels of inter beam interference with said beam.

In some but not necessarily all examples, the at least one measurement report further comprises at least one further indication for at least one of:
indicating which pair of beams of a group of beams has a greatest level of inter beam interference; and
indicating which pair of beams of a group of beams has a lowest level of inter beam interference.

In some but not necessarily all examples, the at least one further indication is provided via at least one of:
an explicit indication;
a flag;
a dedicated bit; and
an order of the L1-SINR measurements for the group in the at least one measurement report.

In some but not necessarily all examples, the apparatus further comprises:
means for transmitting, to an access node, capability information indicative of whether the apparatus is capable of performing GBBR of L1-SINR measurements using the at least one measurement report.

According to at least some examples of the disclosure there is provided an apparatus comprising:
means for sending, to a User Equipment, UE, configuration information for enabling the UE to:
   perform Group-Based Beam Reporting, GBBR, of Layer 1 signal-to-interference-plus-noise ratio, L1-SINR measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams; and
means for receiving, from the UE, the at least one measurement report.

According to various, but not necessarily all, examples of the disclosure there is provided a method comprising:
sending, to a User Equipment, UE, configuration information for enabling the UE to:
   perform Group-Based Beam Reporting, GBBR, of Layer 1 signal-to-interference-plus-noise ratio, L1-SINR measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams; and
receiving, from the UE, the at least one measurement report.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by an apparatus, cause the apparatus to perform:
sending, to a User Equipment, UE, configuration information for enabling the UE to:
   perform Group-Based Beam Reporting, GBBR, of Layer 1 signal-to-interference-plus-noise ratio, L1-SINR measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams; and
receiving, from the UE, the at least one measurement report.

According to various, but not necessarily all, examples of the disclosure there is provided an apparatus comprising:
at least one processor; and
at least one memory storing instructions that, when executed by the at least one processor,
cause the apparatus at least to:
   send, to a User Equipment, UE, configuration information for enabling the UE to:
      perform Group-Based Beam Reporting, GBBR, of Layer 1 signal-to-interference-plus-noise ratio, L1-SINR measurements, and
      generate at least one measurement report for the GBBR of the L1-SINR measurements, wherein the at least one measurement report comprises:
         a first group of L1-SINR measurements for a first group of beams, and
         at least one indication of whether one or more L1-SINR measurements of the first group of L1-SINR measurements can be used as one or more L1-SINR measurements of a second group of L1-SINR measurements for a second group of beams; and
   receive, from the UE, the at least one measurement report.

According to various, but not necessarily all, examples of the disclosure there is provided a non-transitory computer readable medium encoded with instructions that, when executed by at least one processor, causes at least the following to be performed:
send, to a User Equipment, UE, configuration information for enabling the UE to:
   perform Group-Based Beam Reporting, GBBR, of Layer 1 signal-to-interference-plus-noise ratio, L1-SINR measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR
      measurements of a second group of L1-SINR measurements for a second group of beams; and
   receive, from the UE, the at least one measurement report.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the apparatus further comprises:
means for selecting, based at least in part on the at least one measurement report, one or more of the beams of the first group of beams for use in communicating with the UE.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein; and
FIG. 11 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures. In the figures (and description) a similar feature may be referenced by a similar reference numeral.

### ABREVIATIONS/DEFINITIONS

- 3GPP: 3rd Generation Partnership Project
- 5G: 5th Generation
- 5GC: 5G Core
- 6G: 6th Generation
- CSI: Channel State Information
- DL: Downlink
- gNB: 5G / NR base station
- GBBR: Group-Based Beam Reporting
- MIMO: Multiple Input Multiple Output
- PDSCH: Physical Downlink Shared Channel
- RAN: Radio Access Network
- RRC: Radio Resource Control
- RS: Reference Signal
- RSRP: Reference Signal Received Power
- Rx: Receive/Reception
- SINR: Signal to Interference plus Noise Ratio
- TRP: Transmission Reception Point
- UE: User Equipment
- UL: Uplink

### DETAILED DESCRIPTION

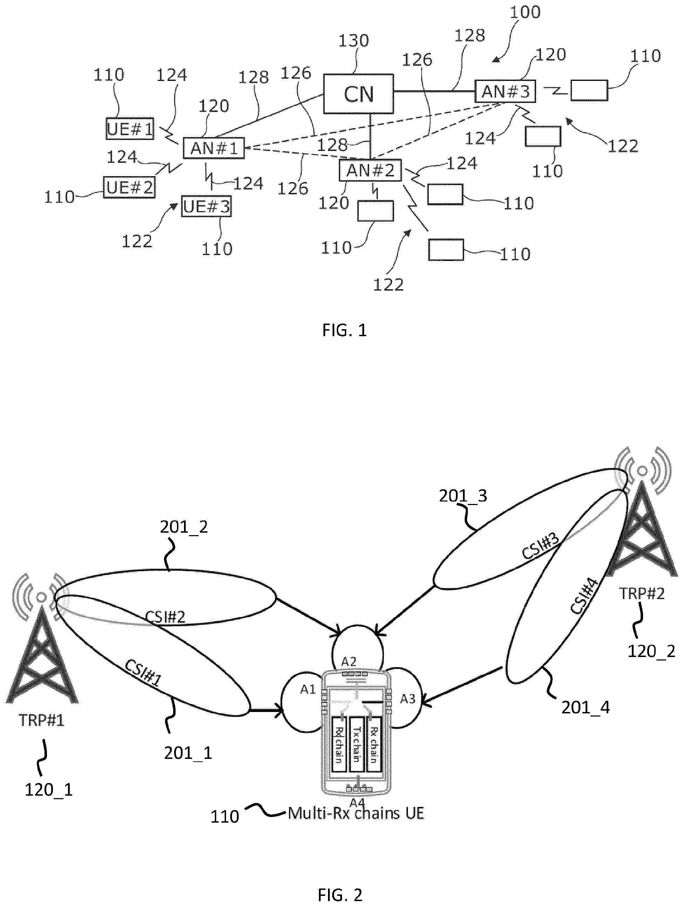

FIG. 1 schematically illustrates an example of a network 100 suitable for use with examples of the present disclosure. The network (also referred to as NW) comprises a plurality of network nodes including: terminal nodes 110 (also referred to as User Equipment, UE), access nodes 120 (also referred to as Radio Access Network, RAN, nodes, or base stations), and one or more core network nodes 130. The terminal nodes 110 and access nodes 120 communicate with each other. The one or more core network nodes 130 may, in some but not necessarily all examples, communicate with each other. The one or more access nodes 120 may, in some but not necessarily all examples, communicate with each other.

The network 100 is in this example a radio telecommunications network, i.e. a RAN, in which at least some of the terminal nodes 110 and access nodes 120 communicate with each other using transmission/reception of radio waves.

The RAN 100 may be a cellular network comprising a plurality of cells 122 each served by an access node 120. The access nodes 120 comprise cellular radio transceivers. The terminal nodes 110 comprise cellular radio transceivers.

In the particular example illustrated, the network 100 may be a New Radio, NR, network of the Third Generation Partnership Project, 3GPP, and its fifth generation, 5G, technology. In other examples, the network 100 may be a network beyond 5G, for example a next generation (i.e. sixth generation, 6G) Radio Network that is currently under development (i.e. an evolution of the NR network and its 5G technology).

The interfaces between the terminal nodes 110 and the access nodes 120 are radio interfaces 124 (e.g., Uu interfaces). The interfaces between the access nodes 120 and one or more core nodes 130 are backhaul interfaces 128 (e.g., S1 and/or Next Generation, NG, interfaces).

Depending on the exact deployment scenario, the access nodes 120 may be RAN nodes such as NG-RAN nodes. NG-RAN nodes may be gNodeBs, gNBs, that provide NG user plane and control plane protocol terminations towards the UE. The gNBs connected by means of NG interfaces to a 5G Core (5GC), more specifically to an Access and Mobility Management Function, AMF, by means of an NG Control Plane, NG-C, interface and to a User Plane Function, UPF, by means of an NG User Plane, NG-U, interface. The access nodes 120 may be interconnected with each other by means of Xn interfaces 126.

The cellular network 100 could be configured to operate in licensed frequency bands, or unlicensed frequency bands (not least such as: unlicensed bands that rely upon a transmitting device to sense the radio resources/medium before commencing transmission, such as via a Listen Before Talk, LBT, procedure; and a 60GHz unlicensed band where beamforming may be required in order to achieve required coverage).

The access nodes 120 may be deployed in an NG standalone operation/scenario. The access nodes 120 may be deployed in a NG non-standalone operation/scenario. The access nodes 120 may be deployed in a Carrier Aggregation, CA, operation/scenario. The access nodes 120 may be deployed in a Dual Connectivity, DC, operation/scenario, i.e., Multi Radio Access Technology - Dual Connectivity, MR-DC, or NR-DC. The access nodes 120 may be deployed in a Multi Connectivity, MC, operation/scenario.

In such non-standalone/dual connectivity deployments, the access nodes 120 may be interconnected to each other by means of X2 or Xn interfaces, and connected to an Evolved Packet Core, EPC, by means of an S1 interface or to the 5GC by means of a NG interface.

The terminal nodes 110 are network elements in the network that terminate the user side of the radio link. They are devices allowing access to network services. The terminal nodes 110 may be referred to as User Equipment, UE, mobile terminals or mobile stations. The term 'User Equipment' may be used to designate mobile equipment comprising means, such as a smart card, for authentication/encryption etc such as a Subscriber Identity Module, SIM. A SIM/SIM card can be a memory chip, a module, or a Universal Subscriber Identity Module (USIM).

In some examples, the term 'User Equipment' can be used to designate a location/position tag, a hyper/smart tag or a mobile equipment comprising circuitry embedded as part of the user equipment for authentication/encryption such as a software SIM. Terminal node 110 functionalities may be performed also by Mobile Termination, MT, part of an Integrated Access and Backhaul, IAB, node.

The access nodes 120 are network elements in the network responsible for radio transmission and reception in one or more cells 122 to or from the terminal nodes 110. The access nodes 120 are the network termination of a radio link. An access node 120 may be implemented as a single network equipment, or have a split architecture that is disaggregated/distributed over two or more RAN nodes, such as a Central Unit, CU, a Distributed Unit, DU, a Remote Radio Head-end, RRH, using different functional-split architectures and different interfaces.

Where the access node 120 has a disaggregated (split) architecture, the access node 120 may comprise one or more distributed units, gNB-DU, and a centralized unit, gNB-CU (not shown in FIG. 1). The gNB-CU is a logical node configured to host a Radio Resource Connection, RRC, layer and other layers of the access node 120. The gNB-CU controls the operation of one or more gNB-DUs. The gNB-DU is a logical node configured to host Radio Link Control, RLC, protocol layer, Medium Access Control, MAC, layer and Physical, PHY, layer of the access node 120. The gNB-DU may communicate via a dedicated interface (e.g. an F1 interface) to a Radio Resource Control, RRC, layer hosted by the gNB-CU. One gNB-DU may support one or multiple cells 122. The gNB, or a gNB-DU, may host one or more Transmission Reception Points, TRPs. gNB-DU functionalities may be performed also by a DU part of an IAB node.

In the following description, a terminal node may be referred to simply as UE 110. In the following description, an access node, a Radio Access Network, RAN, node, a gNB or a TRP may be referred to simply as a network node 120.

Each of a network node and a UE 110 may comprise one or more antennas, antenna patches and/or antenna panels, each comprising an array of antenna elements serving as receivers and transmitters. A controller may control phase shifts and amplitudes of the radio frequency electrical signals applied to the antenna elements to generate a beamformed directional electromagnetic wave transmitted signal having a controlled direction/beam steering direction and a beam pattern (radiation pattern), thereby forming a transmission beam (e.g. a network node transmission beam for use with downlink transmission - referred to herein as a DL beam; and a UE transmission beam for use with uplink transmission - referred to herein as an UL beam). The transmission beam relates to a spatially directed transmission with power focussed in an aiming direction or beam steering/pointing angle, such an angle corresponding to a direction of a main lobe of the transmitted radiation pattern.

The controller may process the phase shifts and amplitudes of radio frequency electrical signals from the antenna elements (such radio frequency electrical signals corresponding to transduced electrical signals from received electromagnetic wave signals) to achieve a preferred beamforming direction for reception, thereby forming a reception beam (e.g. a UE reception beam for use with downlink reception, and a network node reception beam for use with uplink reception). The reception beam relates to spatially directed reception wherein reception sensitivity is maximal at an aiming direction or pointing angle.

Beamforming, to form directional links for radio communication, may be used to compensate for high path-losses due to poor radio frequency (RF) propagation, which may affect not least the high frequency transmissions that can be used with 5G NR networks, e.g. transmissions at Frequency Range 2 (FR2) i.e. in the region of 24 - 52.6 GHz (as compared to Frequency Range 1 (FR1)'s sub 6 GHz range) as well as frequencies in excess of FR2, i.e. above 52.6 GHz and especially on the 60 GHz unlicensed band(s). Examples of the present disclosure may find application in 3GPP New Radio (NR) operation at frequencies above 52.6 GHz.

Transmission of signals to the UE 110 from the network node 120 is downlink (DL) transmission via a beam pair. Such a beam pair may be considered to comprise a directional transmission beam from the network node (referred to herein as a DL beam) and a directional reception beam of the UE. Such a directional transmitter-side beam and a corresponding aligned directional receiver side beam jointly provide a beam pair for DL transmission/reception and connectivity (i.e. an optimal radio communication link/channel within the constraints of power, bandwidth and signal quality). It is to be appreciated that the transmission and reception beams are not necessarily physically aligned towards each other/in direct line of sight, not least for example in situations where there is a rich-scattering environment.

In a 5G NR network, the beam pair may be considered to relate to a beamformed directional link from the network node to the UE, such a directional link having a directional transmission beam for network node transmission (network node DL Tx beam), and a corresponding aligned directional reception beam for the DL reception (UE DL Rx beam), such a transmission beam and reception beam for DL transmission thereby defining a beam pair for DL transmission/reception. Similarly, UL transmission of signals from the UE 110 to the network node 120 is via a beam pair comprising a directional transmission beam (from the UE) and directional reception beam (of the network node). Such a directional transmitter-side beam and a corresponding aligned directional receiver side beam jointly provide a beam pair for UL transmission/reception and connectivity.

A transmitter, e.g. a transmitting network node, may use beam sweeping (i.e. transmitting reference signals from each of its directional transmission beams) to enable a receiver, e.g. a UE, to determine an optimal transmission beam that provides optimal reception by the receiver. The receiver may itself use beam sweeping, e.g. of its directional reception beams, to enable a receiver to determine an optimal reception beam that provides optimal reception by the receiver. In such a manner, the receiver's reception beam may be duly aligned with the determined optimal transmission beam.

A UE may be configured to monitor a downlink reception quality parameter, for example, Reference Signal Received Power, RSRP, of a downlink reference signal, such as Synchronization Signal Block, SSB, and/or Channel State Information Reference Signal, CSI-RS. The downlink reception quality parameter may be dependent upon a path loss incurred by the reference signals after propagation over the air. The downlink reception quality parameter may further be dependent upon downlink reception gain or loss, which may depend not least upon the number of antenna elements of the UE used for downlink reception and the beam steering angle. The UE can infer whether or not a candidate downlink beam having a particular beam steering angle is optimal or acceptable for use in DL communication based on the reception quality parameter for the candidate DL beam, i.e. if the RSRP is above a sensitivity limit (the sensitivity limit being defined as the lowest received power level at which the downlink can still be decoded at a given bit error rate).

The UE may report its downlink reception quality parameter in a Layer 1, L1, report. L1 reports are part of Channel State Information, CSI. CSI-RS measurements and L1 reporting can be periodic, semi-periodic (which may be activated/deactivated by Medium Access Control, MAC, signalling) or aperiodic (which may be triggered by Downlink Control Information, DCI, signalling). L1 reporting may be on Physical Uplink Control Channel, PUCCH (periodic, semi-periodic) or Physical Uplink Shared Channel, PUSCH (aperiodic, semi-periodic).

Some UEs are able to receive two Physical Downlink Shared Channels, PDSCHs, simultaneously and with different angle of arrivals. In this regard, a UE can be considered to receive two beams concurrently.

In Release 16, Rel-16, TS 38.306, a UE is able to indicate its capability as to whether it supports receiving two Physical Downlink Shared Channels, PDSCHs, simultaneously and with different angle of arrivals, e.g. not least via the following information element, IE:
**simultaneoustReceptionDiffTypeD-r16**
Indicates whether the UE support simultaneous reception with different QCL Type D reference signal as specified in TS 38.213.

FIG. 2 schematically illustrates two TRPs 120_1 and 120_2, and a UE 110. The first TRP 120_1 is transmitting two beams 201_1 and 201_2, each with their own CSI-RS, namely: CSI#1 and CSI#2 respectively. The second TRP 120_2 is also transmitting two beams 201_3 and 201_4- CSI#3 and CSI#4 respectively. In the following description, differing CSI-RSs, e.g. CSI#1 - CSI#4 may be referred to simply as differing beams, e.g. beams 1 - 4.

The fours beams 201_1 - 201_4 define a first group of beams 201. This first group of beams comprises a set of potential candidate beams that the UE could receive - albeit not necessarily all simultaneously.

The UE comprises multiple antenna panels (A1 - A4). In the example scenario of FIG. 2, the UE's capability (i.e. based not least on its arrangement of antenna panels and Rx circuitry, is such that the UE is capable of receiving only up to two beams simultaneously).

In the example scenario of FIG. 2, the UE is capable of simultaneously receiving the following pairs/groups of beams:

| | |
|---|---|
| Pair 1 | CSI#1 + CSI#3 |
| Pair 2 | CSI#2 + CSI#4 |
| Pair 3 | CSI#1 + CSI#4 |
| Pair 4 | CSI#1 + CSI#2 |
| Pair 5 | CSI#3 + CSI#4 |

It is noted that, in the example illustrated, CSI#2 + CSI#3 could only be a pair of beams that the UE could simultaneously receive if the UE supported 2 Rx chains on the same antenna panel (i.e. with dedicated Radio Frequency, RF, Front End, FE, architecture).

Rel-17 specified Group-Based Beam Reporting, GBBR, where the UE reports M groups/pairs (i.e., beams that can be simultaneously received) of N beams per group, with N>1. Regarding the number of beams N per group, the focus up to Rel-17 has been on each "pair" of beams, i.e., N=2.

The grouping/pairing is done by the UE according to its capabilities. With Rel-17 (3GPP TS 38.214 v.17.6.0, section 5.2.1.4.2 regarding the higher layer parameter *groupBasedBeamReporting*) the groups can be reported across multiple TRPs - as is illustrated in FIG. 2 wherein groups/pairs of beams include beams from different TRPs (e.g. Pairs 1, 2 and 3).

A number of groups M is reported to a TRP per CSI report. The max(M) per CSI report is a UE capability where the UE chooses among {1,2,3,4}. Max(M) is RRC configured by the network. In the current specification, Max(M) is ≤ 4. With regards to FIG. 2, the UE can only report up to 4 groups (i.e. 4 pairs, Pairs 1 - 4). Even though the UE could report simultaneously Pair 5, the UE's GBBR is limited, under current specifications, to report only up to 4 groups/pairs.

Conventional GBBR is typically GBBR of L1-RSRP measurements. However, such L1-RSRP measurements do not take into account any inter-beam interference that a UE may experience in the reception of a particular group of beams.

By making use of L1-SINR measurements, it may be possible to determine inter-beam interference. This may enable a network node to select a beam group/pair based at least in part on inter-beam interference at the UE, i.e. so as to seek to minimise Downlink, DL interference when scheduling beams simultaneously. Accordingly, it would be desirous to provide L1-SINR reporting for use in beam management and selection.

However, conventionally, when a UE reports L1-SINR for N beams, the network node (e.g. gNB) does not have enough information to schedule L<N beams. This is because, in a UE's conventional report of L1-SINR for N beams, the interference of all the other beams is summed up when computing an achievable SINR for a certain beam. In other words, with conventional L1-SINR reporting, for each beam, the UE includes in the SINR computation the cross-beam interference from all the other beams. This does not allow the network node to determine which interference is caused by a certain beam "x" toward another beam "y".

This issue may arise for any N>1, but has more impact for larger values of N (with N=2 there is only one beam causing interference to the other beam).

One simplistic approach to L1-SINR reporting for seeking to enable a network node to determine inter-beam interference from each combination of beams, would be for the UE, in addition to reporting L1-SINR for a group of beams, to report all combinations.

However, the drawback of this first simplistic approach is that would have a very large overhead, which scales up quickly with increasing N.

By way of an example illustration with regard to the first simplistic approach, if N=3 beams {"x", "y", "z"} were to be reported, the UE reports: {"x", "y", "z"} AND {"x", "y"} AND {"x", "z"} AND {"y", "z"} AND {"x"} AND {"y"} AND {"z"}. Hence, with N=3 beams, the UE would need to report 12 L1-SINR values. If there were 4 beams, the UE would need to report 32 L1-SINR values.

Another simplistic approach to L1-SINR reporting for seeking to enable a network node to determine inter-beam interference from each combination of beams, would be for the UE to treat different combinations as different groups, and leave it up to UE implementation to decide which group is to be reported.

By way of an example illustration with regard to the second simplistic approach, if there were N=3 beams {"x", "y", "z"}, the UE could decide to report a first group with N=3 beams {"x", "y", "z"} (with 3 L1-SINR values) and a second group with N=2 beams {"x", "y"} (with 2 L1-SINR values). It would then be up to the UE to just select the groups that are better candidates.

Whist, unlike the first simplistic approach, the second simplistic approach does not require all combinations to be reported, the drawback of the second simplistic approach is that it is still not efficient. It does not exploit the fact that the second group is a subset of the first group and that L1-SINR values could be highly correlated.

For instance, in the scenario of the second simplistic approach, with beams {"x", "y", "z"}, we may have a situation that beam "z" is highly orthogonal when compared to the other two beams "x" and "y". Therefore, the L1-SINR values of beams "x" and "y" in the first group {"x", "y", "z"} would be almost identical to the L1-SINR values of beams "x" and "y" in the second group {"x", "y"}.

Accordingly, the above discussed simplistic approaches do not enable efficient L1-SINR reporting for use in minimizing DL interference when scheduling L<N beams simultaneously (in particular where N>2). The above discussed simplistic approaches either add too large an overhead to make the feature worthwhile, or do not provide all the available combinations of L1-SINR values thereby limiting gNB's flexibility in beam scheduling.

Examples of the present disclosure may seek to optimize GBBR to support N beams per group with L1-SINR reporting, which may thereby allow a network node, e.g. gNB, to schedule up to N beams (and not necessarily all N beams).

As will be discussed in further detail below, the figures schematically illustrate, and the following description describes, various examples of the disclosure that seek to provide improved GBBR of L1-SINR measurements by enabling use of at least one measurement report 303 comprising:
a first group of L1-SINR measurements 401 for a first group of beams 201, and
at least one indication 304 of whether one or more L1-SINR measurements 401_1 of the first group of L1-SINR measurements 401 can be used as one or more L1-SINR measurements 402_1 of a second group of L1-SINR measurements 402 for a second group 202 of beams.

It is to be appreciated that L1-SINR measurements for a first group of beams - i.e. N beams - may correspond to an L1-SINR measurement value, for each beam of the group of N beams, that includes the inter-beam interference from all the remaining N-1 beams.

Likewise, it is to be appreciated that L1-SINR measurements for a second group of beams - i.e. K beams - may correspond to an L1-SINR measurement value, for each beam of the group of K beams, that includes the inter-beam interference from all the remaining K-1 beams. Where the second group of beams is a subgroup of the first group - i.e. K beams out of N beams - then, for each beam of the group of K beams, the SINR measurement value would include only the inter-beam interference from the remaining K-1 beams (i.e. the beams that belong to the group of N but not to the group of K would be excluded from the SINR inter-beam interference measurement).

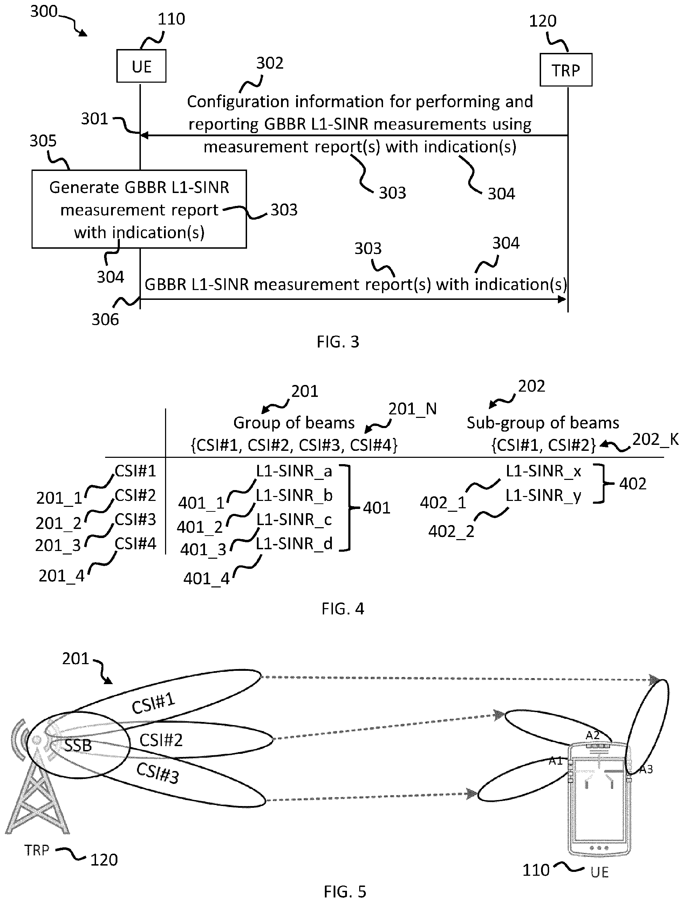

FIG. 3 schematically illustrates an example of a method 300 for GBBR of L1-SINR measurements in accordance with the present disclosure. The method illustrates the transmission/reception of information between a UE 120 and an access node 120, referred to herein as TRP 120.

One or more of the features discussed in relation to FIG. 3 can be found in one or more of the other FIGs, not least the non-limiting example of FIG. 4. During discussion of FIG. 3, use will be made of reference numerals of features shown in other FIGs (not least FIG. 4) for the purposes of explanation.

FIG. 4 schematically illustrates an example of two groups for use in GBBR of L1-SINR measurements, namely a first group for a first group of beams 201, and a second group for a second group of beams 202. The first group of beams comprises/consists of a set of beams (201_1, 201_2, 201 _3 and 201_4). Each beam of the first group of beams is a potential candidate beam/a beam that could be received by the UE (albeit not necessarily simultaneously). The second group of beams consists of a sub-group (201_1 and 201_2) of the first group of beams, and in particular wherein the beams of the sub-group of beams are beams that the UE is able to simultaneously receive. In effect, one could consider that the first group of beams comprises all of the potential candidate beams, each individually/separately receivable by the UE (though not necessarily all simultaneously); whereas the second group of beams comprises a sub-group of the first group of beams that are able to be simultaneously received by the UE.

In this example, the first group of beams 201 comprises/consists of 4 beams: 201_1 - 201_4, i.e. CSI#1 - CSI#4. The second group of beams 202, consists of 2 beams: 201_1 and 201_2, i.e. CSI#1 and CSI#2.

The UE may perform L1-SINR measurements for the first group of beams 201 to determine a first group (401) of L1-SINR measurements for the first group of beams. In this example, the first group (401) of L1-SINR measurements comprises/consists of:
a first L1-SINR measurement 401_1 "L1-SINR_a", for a first beam 201_1, with inter beam interference from the other beams (201_2, 201 _3, 201_4);
a second L1-SINR measurement 401_2 "L1-SINR_b", for a second beam 201_2, with inter beam interference from the other beams (201_1, 201 _3, 201_4);
a third L1-SINR measurement 401_3 "L1-SINR_c", for a third beam 201_3, with inter beam interference from the other beams (201_1, 201_2, 201 _4); and
a fourth L1-SINR measurement 401_4 "L1-SINR_d", for a fourth beam 201_4, with inter beam interference from the other beams (201_1, 201 _2, 201_3).

Similarly, the UE may perform L1-SINR measurements for the second group of beams 202 to determine a second group 402 of L1-SINR measurements for the second group of beams. In this example, the first group 401 of L1-SINR measurements comprises/consists of:
a first L1-SINR measurement 402_1 "L1-SINR_x", for the first beam 201_1, with inter beam interference from the other beam in the second group 201_2; and
a second L1-SINR measurement 402_2 "L1-SINR_y", for the second beam 201_2, with inter beam interference from the other beam 201 _1.

In block 301 of FIG. 3, the UE 110 receives configuration information 302 from the TRP 120. The configuration information comprises information for configuring/enabling the UE to perform GBBR of L1-SINR measurements, wherein such GBBR of L1-SINR measurements comprises generating at least one measurement report 303 for the GBBR of the L1-SINR measurements. The configuration information may be sent by network to the UE via Radio Resource Control, RRC, signalling.

In this regard, the at least one measurement report that the UE is configured to report in its L1-SINR GBBR comprises a first group of L1-SINR measurements 401 for a first group of beams 201. The at least one measurement report also comprises at least one indication 304 of whether one or more L1-SINR measurements 401_1 of the first group of L1-SINR measurements 401 can be used as one or more L1-SINR measurements 402_1 of a second group of L1-SINR measurements 402 for a second group 202 of beams.

The configuration information comprises information for configuring/enabling the apparatus to generate the at least one measurement report 303 for the GBBR of the L1-SINR measurements. In this regard, the configuration information may comprise information for enabling the UE to determine (e.g. ascertain/establish) whether one or more L1-SINR measurements 402_1 of the second group of L1-SINR measurements 402 for the second group 202 of beams can be represented by at least one indication in the at least one measurement report.

By enabling the UE to include such an indication (e.g. a 1-bit flag) in the at least one measurement report instead of having to explicitly include, in the at least one measurement report, the actual one or more L1-SINR measurements 402_1 of the second group of L1-SINR measurements 402 for the second group 202 of beams, examples of the present disclosure may provide more efficient L1-SINR GBBR.

In some examples, the second group of beams 202 comprises or consists of
a subgroup of beams of the first group of beams (in this regard, the first group of beams may comprise a first plurality of N beams, and the second group of beams may comprise second plurality of K beams wherein the second group of beam is a subgroup of the first group of beams, i.e. K ⊂ N); and
one or more beams that the apparatus is able to simultaneously receive.

In some examples, the one or more L1-SINR measurements 402_1 of a second group of L1-SINR measurements 402 for the second group 202 of beams are represented in the at least one measurement report via the at least one indication.

In some examples, the at least one indication is indicative of whether one or more L1-SINR measurements 401_1, for respective one or more beams 201_1, of the first group of L1-SINR measurements 401 are within a threshold difference of the one or more beam's respective L1-SINR measurements 402_1 for the second group 202 of beams.

The configuration information may comprise information indicative of the threshold difference. Such information may enable the UE to determine (e.g. ascertain/establish) whether the one or more L1-SINR measurements 402_1 of the second group of L1-SINR measurements 402 for the second group 202 of beams can be represented by at least one indication in the at least one measurement report.

The threshold difference may be determined by the TRP and/or decided by the network. Its value may be up to network implementation. By way of a non-limiting example, the threshold difference could be determined based on one or more criterion related to the quality of the TRP's receiver: the better the receiver the larger the threshold (and conversely) the worse the receiver the smaller the threshold. If the BS receiver were very good, the threshold can be larger, whereas, if the receiver were not very good, the threshold should be smaller. Here, receiver being good or bad could refer to different characteristics of the receiver not least such as its algorithms and decoder.

In some examples, the L1-SINR measurements 401 for the first group of beams 201 comprise a first set of first measurement values (e.g. L1-SINR_a to L1-SINR_d) of inter beam interference for each beam of the first group of beams due to the other beams of the first group of beams; and the L1-SINR measurements 402 for the second group of beams 202 comprise a second set of second measurement values (e.g. L1-SINR_x and L1-SINR_y) of inter beam interference for each beam of the second group of beams due to the other beams of the second group of beams.

In some examples, the at least one indication is indicative of whether one or more second L1-SINR measurement values for one or more beams can be represented by one or first L1-SINR measurement values for the respective one or more beams.

In some examples, the at least one measurement report 303 that the UE is configured to use comprises a second group of L1-SINR measurements 402 for the second group of beams 201; and at least one of the L1-SINR measurements 402 for the second group of beams 201 is represented by the at least one indication.

In some examples, the second group of L1-SINR measurements 402 of the at least one measurement report comprises:
the at least one indication for representing the at least one of the L1-SINR measurements 402 for the second group of beams 201; and
at least one L1-SINR measurement value for at least one the L1-SINR measurements 402 for the second group of beams 201.

In block 305, the UE generates the at least one measurement report based at least in part on the configuration information 302.

In this regard, the UE may generate the at least one measurement report in accordance with the configuration information 302 received in block 301.

The generation of the at least one measurement report may comprise:
determining (e.g. measuring/calculating/evaluating) one or more L1-SINR measurements (401_1) of the first group of L1-SINR measurements (401);
determining (e.g. measuring/calculating/evaluating) one or more L1-SINR measurements (402_1) of a second group of L1-SINR measurements (402) for a second group (202) of beams; and
determining (e.g. ascertaining/establishing) which of the one or more L1-SINR measurements (402_1) of the second group of L1-SINR measurements (402) for the second group (202) of beams can be represented in the at least one measurement report by at least one indication.

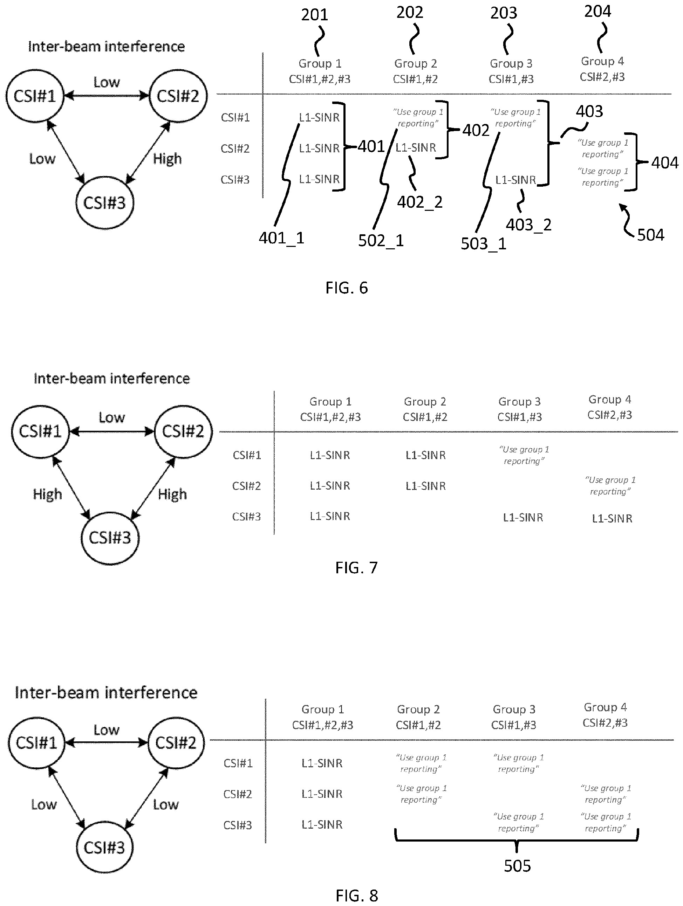

In some examples, the UE determines/identifies a beam 201_1, of the first group of beams, which has a first L1-SINR measurement 401_1 with inter beam interference from the other beams 201_2 - 201_4 of the first group of beams that is within a threshold difference of a second L1-SINR measurement 402_1, for the beam 201_1, with inter beam interference from the other beams (201_2) of the second group of beams. The at least one indication may be indicative of whether the first L1-SINR measurement for the determined beam can be used as the second L1-SINR measurement for the determined beam. In this regard, in effect, where the second L1-SINR measurement 402_1 is the same as the equivalent first L1-SINR measurement 401_1, then the at least one measurement report includes an indication for the SINR measurement 402_1, instead of including actual value of the SINR measurement 402_1. This is shown in FIG 6 with respect to the use of indicators 502_1 and 503_1.

In some examples, the UE determines a beam 201_2, of the first group of beams, which has a first L1-SINR measurement 401_2 with inter beam interference from the other beams 201_1, 201 _3, 201_4 of the first group of beams that exceeds a threshold difference of a second L1-SINR measurement 402_2 for the beam (201_2) with inter beam interference from the other beam (201_1) of the second group of beams. The second L1-SINR measurement for the determined beam may be represented, in the at least one measurement report, via an L1-SINR measurement value for the determined beam. In this regard, in effect, where the second L1-SINR measurement 402_2 is not the same as the equivalent first L1-SINR measurement 401_2, then the at least one measurement report includes the actual value of the SINR measurement 402_2. This is shown in FIG 6 with respect to the use of the actual SINR measurement values 402_2 and 403_2.

The indication is not limited to indicating whether a single/individual L1-SINR measurement of the first group of L1-SINR measurements can be used as a single/individual L1-SINR measurement for the second group of beams. Indeed, in some examples, the at least one indication is indicative of whether a plurality of L1-SINR measurements of the first group of L1-SINR measurements can be used as a plurality of L1-SINR measurements for the second group of beams.

In some examples, the at least one indication is indicative of whether the L1-SINR measurements from the first group of L1-SINR measurements, for beams of the second group of beams, can be used as the L1-SINR measurements for the second group of beams. In this regard, in effect, the indication indicates that all the second L1-SINR measurements 402_1 and 402_2 for the second group of beams 202 are the same as the equivalent first L1-SINR measurements. This is shown in FIG 6 with respect to the use of a single indicator 504. In effect, this can effectively be considered to be a sub-group-based indication, i.e. the indication applies to all beams in the subgroup (as opposed to the above described examples wherein the indication applies to one or more individual beams in the subgroup).

In some examples, the first group of beams may comprise a plurality of subgroups of beams, and the at least one indication may be indicative of whether L1-SINR measurements from the first group of L1-SINR measurements can be used as L1-SINR measurements for the plurality of subgroups of beams. In this regard, the indication may be indicative of whether the L1-SINR measurements from the first group of L1-SINR measurements, for respective beams of all of the subgroup of beam, can be used as the L1-SINR measurements for all the subgroups of beams. This is shown in FIG 8 with respect to the use of a single indicator 505. In effect, this can effectively be considered to be an all-sub-group-based indication, i.e. the indication applies to all of the subgroups (as opposed to the indication merely applying to individual beams or individual subgroups).

In some examples, the at least one indication may comprise: an explicit indication; a flag; and/or a dedicated bit.

In some examples, the at least one indication may be implicit. In this regard, the at least one indication may be indicative of whether L1-SINR measurements from the first group of L1-SINR measurements for the beams of the second group of beams can be used as the L1-SINR measurements for the second group of beams, and the at least one indication may be implicitly provided by configuring the at least one measurement report 303 so as to:
report the first group of L1-SINR measurements 401 for a first group of beams 201, and
not report the second group of L1-SINR measurements 402 for the second group of beams 202.

In this regard, the absence of including any L1-SINR measurements (401) for the second group of beams may be taken as an implicit indication that L1-SINR measurements from the first group of L1-SINR measurements for the beams of the second group of beams can be used as the L1-SINR measurements for the second group of beams.

In block 306, the UE transmits the at least one measurement report to the TRP 120.

In some examples, the at least one measurement report is transmitted in a Channel State Information, CSI, report.

Advantageously, examples of the disclosure may enable the use of an indication (e.g. a 1-bit flag) in at least one GBBR measurement report, i.e. instead of having to explicitly include the actual one or more L1-SINR measurements of the second group of L1-SINR measurements for the second group of beams. Examples of the present disclosure may thereby provide more efficient L1-SINR GBBR.

For example, it may be that in certain situations (e.g. depending on the inter-beam interference between various of the beams), an L1-SINR measurements 401_1 of the first group of L1-SINR measurements 401 for a first beam 201_1 could be the same as/substantially similar to (i.e. within a threshold difference of) an L1-SINR measurements 402_1 of the second group of L1-SINR measurements 402 for the second group 202 of beams for the beam 201_1; i.e. the L1-SINR measurement value L1-SINR_x might be the same as the L1-SINR measurement value L1-SINR_a. In which case, the at least one measurement report could comprise an indication that the L1-SINR measurement value L1-SINR_a can be used for the L1-SINR measurement value L1-SINR_x.

Advantageously, rather than the at least one measurement report explicitly including the actual L1-SINR measurement value L1-SINR_x; instead, the L1-SINR measurement value L1-SINR_x could be represented in the at least one measurement report via a simple an indication (e.g. a 1 bit flag). Such an indication can be included in the at least one measurement report to indicate that L1-SINR_a can be used for L1-SINR_x (i.e. thereby indicating that L1-SINR_a, which was included report's first group of L1-SINR measurements 401 for a first group of beams 201, is substantially equal to L1-SINR_x).

The indication could be on an 'individual L1-SINR measurement basis', e.g. an indication for indicating that an L1-SINR measurement of the first group of L1-SINR measurements can be used as an L1-SINR measurement of the second group of L1-SINR measurements for the second group 202 of beams (e.g. such as discussed above, as well as discussed below and illustrated with regards to FIG. 6's indication 502_1, or indication 503_1).

The indication could be on a 'sub-group basis', e.g. an indication for indicating that all the L1-SINR measurement of the second group of L1-SINR measurements for the second group of beams could be represented by L1-SINR measurements of the first group of L1-SINR measurements (e.g. such as discussed below and illustrated with regards to FIG. 6's indication 504).

The indication could be on an 'all sub-group basis', e.g. an indication for indicating that all the L1-SINR measurement of all the groups of L1-SINR measurements for all the sub-groups of beams could be represented by L1-SINR measurements of the first group of L1-SINR measurements (e.g. such as discussed below and illustrated with regards to FIG. 8's indication 505).

Examples of the invention may thereby provide more efficient L1-SINR GBBR.

In some examples, the UE may receive, from the TRP, information indicative of one or more parameters for use in determining whether the one or more L1-SINR measurements 401_1 of the first group of L1-SINR measurements 401 can be used as the one or more L1-SINR measurement 402_1 for the second group 202 of beams. For instance, the one or more parameters may be one or more threshold difference values for use in determining whether L1-SINR measurements 401 for a beam are sufficiently close (within a threshold difference) to their respective L1-SINR measurements 402 for the beam.

In some examples, the at least one measurement report 303 may be configured so as to further comprise one or more additional indications for indicating which one or more beams of the first group of beams causes the one or more greatest levels of inter beam interference with a given beam of the first group of beams.

In some examples, the at least one measurement report 303 may be configured so as to further comprise, for each beam of the first group of beams, one or more additional indications for indicating which one or more beams of the first group of beams causes one or more greatest levels of inter beam interference with said beam.

In some examples, the at least one measurement report 303 may be configured so as to further comprise a further indication for indicating which pair of beams of a group of beams has a greatest level of inter beam interference.

In some examples, the at least one measurement report 303 may be configured so as to further comprise a further indication for indicating which pair of beams of a group of beams has a lowest level of inter beam interference.

In some examples, the UE transmits, to the TRP, capability information indicative of whether the UE is capable of performing GBBR of L1-SINR measurements using the at least one measurement report. The TRP's configuration information that is sent to the UE may be based at least in part, on the capability information.

In some examples, the TRP, may select, based at least in part on the at least one measurement report, one or more of the beams of the first group of beams for use in communicating with the UE. In this regard, the TRP may determine to schedule a subgroup of beams, selected taking into account inter-beam interference, so as to minimize DL interference. The TRP may schedule PDSCH on the selected beams.

The above examples of the disclosure have been described with N = 4, where N = the number of beams per group of the at least one GBBR measurement report. However, it is to be appreciated that each group may have its own value of N and, moreover, N may be greater than 2. Indeed, the benefits and efficiencies in GBBR L1-SINR in accordance with examples of the present disclosure increase for groups with larger N, i.e., N>2.

FIG. 3 and the above described functionality can be considered to illustrate/describe a plurality of methods, wherein each method of the plurality of methods is performed by individual apparatuses/elements/entities/actors - namely a UE 110 and a network node/TRP 120. In this manner, each such method corresponds to one or more actions by/at a respective apparatus/element/entity/actor, such as one of the: UE 110 or TRP 120.

In the example of FIG. 3, a plurality of apparatuses/elements transmit and/or receive one or more signals and/or one or more messages across and/or via and/or using a network. In examples, any suitable form of communication in any suitable network can be used. For example, at least a portion of the network 100 of FIG. 1 can be used. Accordingly, in some examples, the plurality of apparatuses/elements in FIG. 3 may form at least a portion of a network 100 as described in relation to FIG. 1. In some but not necessarily all examples, communications and/or transmissions between apparatuses/elements illustrated in FIG. 3 can proceed via any number of intervening elements, including no intervening elements.

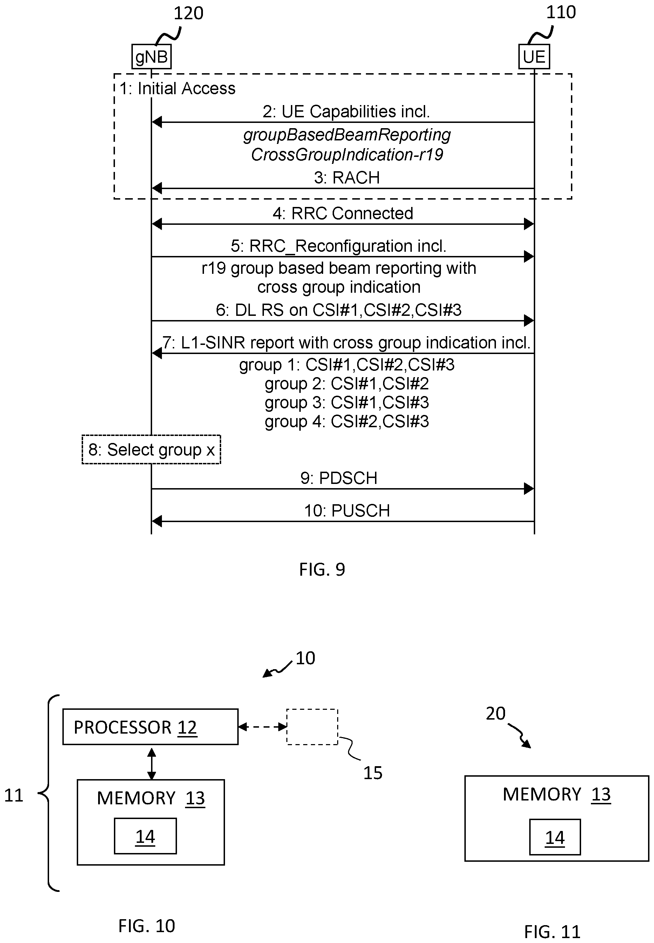

The component blocks of FIG. 3 are functional and the functions shown therein and described above can be performed by a single physical entity (such as the apparatus as described with reference to FIG. 10 - which may be imbodied in a UE or TRP). The functions described can also be implemented by a computer program (such as is described with reference to FIG. 11). The blocks illustrated in FIG. 3 can represent actions in a method, functionality performed by an apparatus, and/or sections of instructions/code in the computer program.

To further describe the proposed scheme for L1-SINR GBBR, reference will now be made to FIGs 5 - 8.

FIG. 5 schematically illustrates a test scenario, wherein a TRP 120 transmits a plurality of beams 201, in this case 3 beams (i.e. Tx beams: CSI#1, CSI#2, and CSI#3). The figure also shows 3 Rx beams of the UE: A1, A2 and A3. Up to N=3 beams {"CSI#1", "CSI#2", "CSI#3"} can be reported by the UE in each group of its L1-SINR GBBR. Moreover, we assume the UE reports M=4 groups in its L1-SINR GBBR.

The different combinations (i.e., groups of 2 beams out of 3 beams reported in the group) that can be measured at the UE are:
Group 1 = {"CSI#1", "CSI#2", "CSI#3"};
Group 2 = {"CSI#1", "CSI#2"};
Group 3 = {"CSI#1", "CSI#3"}; and
Group 4 = {"CSI#2", "CSI#3"}.

There may be different interference conditions among such 3 beams. FIGs 6, 7 and 8 provide examples of differing interference conditions.

FIG. 6 shows the proposed scheme for L1-SINR GBBR in the scenario of Figure 5 with "high" inter-beam interference only between CSI#2 and CSI#3. In particular, there is "low" interference for the pair CSI#1 and CSI#2, as well as for the pair CSI#1 and CSI#3. However, there is "high" interference for the pair CSI#2 and CSI#3.

In such a scenario, the UE reports the actual L1-SINR values (each respective value of the set of values 401) when reporting Group 1 201 {"CSI#1", "CSI#2", "CSI#3"}. However, when reporting Group 2 202, {"CSI#1", "CSI#2"}, where CSI#3 is not included, for CSI#1 the UE can just indicate (via indication 502_1) to reuse the SINR value reported in Group 1 (as CSI#3 caused "low" interference to CSI#1). Whereas, the actual L1-SINR value (402_2) needs to be reported for CSI#2 (as CSI#3 caused "high" interference to CSI#2 in Group 1 and CSI#3 is not part of Group 2 (while it was in Group 1)). In essence, the indication 502_1 provides a 'beam-based indication' (i.e. an indication at an individual beam level/an indication that applies to individual beam(s)) of the re-usability of an L1-SINR value for a beam.

Similarly for Group 3 {"CSI#1", "CSI#3"}, where now CSI#2 is not included, for CSI#1 the UE can just indicate (via indication 503_1) to reuse the SINR value reported in Group 1 (as CSI#3 caused "low" interference to CSI#1). However, the actual L1-SINR value (403_2) needs to be reported for CSI#3 (as CSI#2 caused "high" interference to CSI#3 in Group 1 and CSI#2 is not part of Group 3 (while it was in Group 1)). Similar to indication 502_1, in essence, the indication 503_1 provides a 'beam-based indication'.

Finally for Group 4 {"CSI#2", "CSI#3"}, for both CSI#2 and CSI#3 the UE can just indicate (via indication 504) to reuse the respective SINR value reported in Group 1 (as CSI#1, presents in Group 1 but not in Group 4, was causing "low" interference to both CSI#2 and CSI#3). In essence, the indication 504 provides a 'group-based indication' (i.e. an indication at a group level/an indication that applies to all beams in a group) of the re-usability of L1-SINR values.

Alternatively, instead of using a single 'group-based indication' 504, an 'individual beam-based indication', e.g. 504_1 and 504_2 (not shown) could be used for each beam of each group. However, it is to be appreciate that, where applicable, the use of a single 'group-based indication' 504 would be more efficient/lower signalling overhead that using plural 'individual beam-based indications'.

FIG. 7 shows the proposed scheme for L1-SINR GBBR in the scenario of Figure 5 with "low" inter-beam interference only between CSI#1 and CSI#2. In particular, there is "low" interference for the pair CSI#1 and CSI#2. Whereas there is "high" interference for the pair CSI#1 and CSI#3, as well as for the pair CSI#2 and CSI#3.

Using similar arguments as per FIG. 6, it is possible to show that, when the UE reports the actual L1-SINR values in Group 1, it is possible for certain beams in Groups 3, and 4, to just indicate (using 'beam-based indications') to reuse the respective values reported in Group 1.

FIG. 8 shows the proposed scheme for L1-SINR GBBR in the scenario of "low" interference among all the 3 beams. Such a situation where the inter-beam interference is low for all beams are not that common but is being shown for completeness.

In this case, the UE reports the overall L1-SINR values when reporting Group 1. As the interference caused by one beam to any other beam in group 1 is "low", then, for example the SINR measured by the UE for CSI#1 in Group 2 will be very similar to the SINR measured for CSI#1 in Group 1. Therefore, the UE indicates, via a single indication 505, that any subgroup of Group 1 will measure the same (within a differential threshold) L1-SINR value. In essence, the indication 505 provides an 'all-sub-group-based indication' (i.e. an indication that applies to all beams in all the sub-groups) of the re-usability of L1-SINR values.

Alternatively, instead of using a single 'all-sub-group-based indication' 505, a 'group-based indication' similar to that of 504 of FIG. 6 could be used for each of groups 2, 3, and 4. Likewise, alternatively, an 'individual beam-based indication' similar to that of 502_1 of FIG. 6 could be used for each beam of each groups. However, it is to be appreciate that, where applicable, the use of a single 'all-sub-group-based indication' 505 would be more efficient/lower signalling overhead that using plural 'group-based indications' or plural 'individual beam-based indications'.

In FIG. 8, the indication is shown as being an explicit indication 505 [e.g. a single bit indicator] for indicating that all the sub-groups share the same L1-SINR as the L1-SINR of the entire group. However, in other examples, the cross group indication could be an implicit indication, i.e. the UE is configured to determine that simply receiving a report just of a first/entire group is implicitly indicative of all the sub-groups sharing the same L1-SINR as the L1-SINR of the entire group.

FIG. 9 shows a signalling chart, of signalling between a gNB 120 and a UE 110, in accordance with an example of the present disclosure.

During an initial access procedure 1, in step 2, a UE reports its capability to use the above described L1-SINR GBBR technique, referred to herein a 'cross group indication L1-SINR GBBR', i.e. wherein the at least one measurement report for the L1-SINR GBBR may comprise one or more indications for indicating the re-usability of L1-SINR measurements between groups of the GBBR (the groups of the GBBR comprising: a first group of beams that can be simultaneously scheduled to the UE; and one or more subgroups of the first group, wherein each subgroup consists of beams that the UE can simultaneously receive).

In step 2, the UE capability information may include a parameter "CrossGroupIndication-r19" for the UE to use to indicate its ability to perform cross group indication L1-SINR GBBR. Naturally, an alternative term or label for the parameter/information element could be used.

The initial access procedure 1 also includes, in step 3, the UE performs a Random Access Channel procedure.

Following a successful Random Access Channel procedure in step 3, in step 4, the UE enters an RRC Connected state with the gNB.

In step 5, the gNB configures the UE to use cross group indication L1-SINR GBBR. In this regard, the gNB sends configuration information for enabling the UE to perform cross group indication L1-SINR GBBR. The gNB may select at least one of the below listed options and may duly configure the UE to effect the same.

The gNB may configure the UE with an RRC configuration with one or more of the following options:
Option-1: configuration information for configuring the UE to report a first/entire group only in situations where all the sub-groups share the same L1-SINR as the L1-SINR of the entire group. With regards to the scenarios in FIGs 6 - 8, under option 1, the UE would report group 1 only in FIG. 8's scenario, but not report it in FIG. 6 and 7's scenario.
Option-2: configuration information for configuring the UE to indicate, for a first/entire group, the sub-groups sharing the same L1-SINR as of the entire group, for example identifying them with a flag. This corresponds to, for example, the cross group indication 504 of FIG. 6.
Option-3: configuration information for configuring the UE to report all the sub-groups that are not sharing the same L1-SINR as of the entire group as separate/additional groups; the sub-groups not reported may be implicitly sharing the same L1-SINR value that the one of the entire group. With regards to the scenario of FIG. 6, this would corresponds to reporting L1-SINR measurements for groups 1, 2 and 3, but not reporting L1-SINR measurements for group 4 (it being implicit that, due to the lack of a report L1-SINR measurements for group 4, the L1-SINR measurements for group 4 sharing the same L1-SINR measurements as of the group 1).
Option-4: information indicative of a differential threshold for the L1-SINR value reported for the entire group, within which the UE is not required to report the sub-group. Such as differential threshold may be, by way of a non-limiting example, a 3 dB difference between the L1-SINR value of the first group and the L1-SINR values of the sub-groups. This would mean that, when all L1-SINR values of the sub-group are within 3 dB from the L1-SINR values of the entire group, the sub-group can be assumed to share the same L1-SINR values of the entire group.
Option-5: configuration information for configuring the UE to indicate, for each beam in the entire group, the beam that is creating strongest interference to such beam.
Option-6: configuration information for configuring the UE to indicate which one or more pairs of beams in the entire group (e.g. a certain number of pairs or all pairs of the entire group) are suffering strongest inter-beam interference.
Option-7: configuration information for configuring the UE to indicate which one or more pairs of beams in the entire group (e.g. a certain number of pairs or all pairs of the entire group) are suffering weakest inter-beam interference.

The additional indication(s) used to indicate the interference information of Options 5, 6, and 7, can be explicit, i.e., with dedicated bits to indicate, for example, for Option 5, which beam "x" is creating strongest interference to each beam "y". Alternatively, the indication(s) could be implicit, for instance based on the order of beams reported in a group. For example, the first (or last) two beams reported in a group may be the pair suffering strongest (in Option-6) or weakest (in Option-7) interference.

In step 6, the gNB sends DL RS on each of CS1#1 to CS1 #N.

In step 7, the UE applies the configured cross group indication L1-SINR GBBR. In this regard, the UE performs the configured cross group indication L1-SINR GBBR and reports L1-SINR with at least one measurement report that includes on or more cross group indications.

In step 8, the gNB selects a group of beams based on the received at least one measurement report.

In step 9, the gNB schedules PDSCH on the selected group of beams.

In step 10, the UE schedules PUSCH on the selected group of beams.

Advantageously, examples of the present disclosure enable a UE, when reporting L1-SINR of a group of beams that can be simultaneously scheduled, to indicate whether sub-groups within the group would also measure the same L1-SINR value as reported for the entire group. Such an indication may be referred to as a cross group indication, in that it indicates that one or more L1-SINR values of a first group comprising the entire group of beams would be the same as those for a second group consisting of a subgroup of the first group.

When the L1-SINR values of the sub-groups differ from the L1-SINR values of the entire group, the UE may report multiple groups with a second group being a subset of a first group. Depending on the interference conditions, the L1-SINR for a certain beam in the second group could be reported as:
a. The actual L1-SINR value in case the inter-beam interference for such beam in the second group is different from the inter-beam interference for such beam in the first group (such as schematically illustrated in FIG. 6 with measurement value 402_2), or
b. A flag, implemented for example with a single special bit indication, that indicates to reuse for such beam in the second group the L1-SINR value reported for such beam in the first group (such as schematically illustrated in FIG. 6 with cross group indication 501_1).

An advantage of the present 'cross group indication L1-SINR GBBR' scheme (i.e. as compared to the above discussed first and second simplistic approaches to L1-SINR reporting) is that it may significantly reduce signalling overhead in reporting L1-SINR measurements, in particular for situations where there are many beams per group (large N values). This is because, for certain beams and in certain groups, just a single bit can be used to indicate that a value/values already reported (i.e. reported for the first entire group) can be re-used in: a part of a sub-group (e.g. as per cross group indication 502_1 of FIG. 6), for all of a sub-group (e.g. as per cross group indication 504 of FIG. 6), or for all sub-groups (e.g. as per cross group indication 505 of FIG. 8). Such a single bit indication can be used in instead of explicitly reporting the actual SINR value - which would require a larger number of bits.

It will be understood that each block and combinations of blocks illustrated in FIG. 3, as well as the further functionality described above, can be implemented by various means, such as hardware, firmware, and/or software including one or more computer program instructions. For example, one or more of the functions described above can be performed by a duly configured apparatus (such as an apparatus, in the form of a UE or TRP, comprising means for performing the above described functionality). One or more of the functions/functionality described above can be embodied by a duly configured computer program (such as a computer program comprising computer program instructions which embody the functions/functionality described above and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions/functionality specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure have been described above using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

FIG. 10 schematically illustrates a block diagram of an apparatus 10 for performing the methods, processes, procedures and signalling described in the present disclosure. In this regard the apparatus can perform the roles of the UE 110 or a TRP/access node 120, in the methods illustrated and described above. The component blocks of FIG. 10 are functional and the functions described can be performed by a single physical entity.

The apparatus comprises a controller 11, which could be provided within a device such as a UE 110, or an access node 120.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: a radio transceiver, sensors, input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure. The processor 12 by reading the memory 13 is able to load and execute the computer program 14.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components for effecting the methods, processes and procedures described in the present disclosure and illustrated not least in FIGs. 3 and 9. It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a client device, a server device, a mobile cellular telephone, a base station in a mobile cellular telecommunication system, a wireless communications device, a hand-portable electronic device, a location/position tag, a hyper tag etc. The apparatus can be embodied by a computing device, not least such as those mentioned above. However, in some examples, the apparatus can be embodied as a chip, chip set, circuitry or module, i.e. for use in any of the foregoing.

In one example, the apparatus is embodied on a hand held portable electronic device, such as a mobile telephone, mobile communication device, wearable computing device or personal digital assistant, that can additionally provide one or more audio/text/video communication functions (for example tele-communication, video-communication, and/or text transmission (Short Message Service (SMS)/ Multimedia Message Service (MMS)/emailing) functions), interactive/non-interactive viewing functions (for example web-browsing, navigation, TV/program viewing functions), music recording/playing functions (for example Moving Picture Experts Group-1 Audio Layer 3 (MP3) or other format and/or (frequency modulation/amplitude modulation) radio broadcast recording/playing), downloading/sending of data functions, image capture function (for example using a (for example in-built) digital camera), and gaming functions, or any combination thereof.

In examples where the apparatus is provided within a UE 110, the apparatus comprises:
at least one processor 12; and
at least one memory 13 storing instructions that, when executed by the at least one processor 12, cause the apparatus at least to:
receiving, at an apparatus from an access node, configuration information for configuring the apparatus to:
   perform Group-Based Beam Reporting, GBBR, of Layer 1 signal-to-interference-plus-noise ratio, L1-SINR, measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams;
generating, based at least in part on the configuration information, the at least one measurement report; and
transmitting, to the access node, the at least one measurement report.

In examples where the apparatus is provided within an access node 120, the apparatus comprises:
at least one processor 12; and
at least one memory 13 storing instructions that, when executed by the at least one processor 12, cause the apparatus at least to:
   sending, to a User Equipment, UE, configuration information for enabling the UE to:
      perform Group-Based Beam Reporting, GBBR, of Layer 1 signal-to-interference-plus-noise ratio, L1-SINR measurements, and
      generate at least one measurement report for the GBBR of the L1-SINR measurements, wherein the at least one measurement report comprises:
         a first group of L1-SINR measurements for a first group of beams, and
         at least one indication of whether one or more L1-SINR measurements of the first group of L1-SINR measurements can be used as one or more L1-SINR measurements of a second group of L1-SINR measurements for a second
         group of beams; and
   receiving, from the UE, the at least one measurement report.

According to some examples of the present disclosure, there is provided a system comprising at least one UE 110 and an access node 120 as described above.

The above described examples find application as enabling components of: telecommunication systems, tracking systems, automotive systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things (IOT); Vehicle-to-everything (V2X), virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

FIG. 11, illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus (UE 110), cause the apparatus to perform at least the following or for causing performing at least the following:
receiving, at an apparatus from an access node, configuration information for configuring the apparatus to:
   perform Group-Based Beam Reporting, GBBR, of Layer 1 signal-to-interference-plus-noise ratio, L1-SINR, measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams;
generating, based at least in part on the configuration information, the at least one measurement report; and
transmitting, to the access node, the at least one measurement report.

In certain examples of the present disclosure, there is provided computer program comprising instructions, which when executed by an apparatus (access node 120), cause the apparatus to perform at least the following or for causing performing at least the following:
sending, to a User Equipment, UE, configuration information for enabling the UE to:
   perform Group-Based Beam Reporting, GBBR, of Layer 1 signal-to-interference-plus-noise ratio, L1-SINR measurements, and
   generate at least one measurement report for the GBBR of the L1-SINR measurements, wherein the at least one measurement report comprises:
      a first group of L1-SINR measurements for a first group of beams, and
      at least one indication of whether one or more L1-SINR measurements of the first group of L1-SINR measurements can be used as one or more L1-SINR measurements of a second group of L1-SINR measurements for a second group of beams; and
receiving, from the UE, the at least one measurement report.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims. For example, although one UE 110 is illustrated various of the figures, it is to be appreciated that, in other examples, any suitable number of UEs can be included. Similarly, in various examples, any suitable number of network nodes/TRPs 120 can be included.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components), i.e. so as to provide direct or indirect connection/coupling/communication. Any such intervening components can include hardware and/or software components.

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. An apparatus comprising:
means for receiving, from an access node, configuration information for configuring the apparatus to:
perform Group-Based Beam Reporting, GBBR, of Layer 1 signal-to-interference-plus-noise ratio, L1-SINR, measurements, and
generate at least one measurement report for the GBBR of the L1-SINR measurements, wherein the at least one measurement report comprises:
a first group of L1-SINR measurements for a first group of beams, and
at least one indication of whether one or more L1-SINR measurements of the first group of L1-SINR measurements can be used as one or more L1-SINR measurements of a second group of L1-SINR measurements for a second
group of beams;
means for generating, based at least in part on the configuration information, the at least one measurement report; and
means for transmitting, to the access node, the at least one measurement report;
wherein the second group of beams comprises at least one of:
a subgroup of beams of the first group of beams; and
one or more beams that the apparatus is able to simultaneously receive.

2. The apparatus of any previous claim, wherein the one or more L1-SINR measurements of a second group of L1-SINR measurements for a second group of beams are represented in the at least one measurement report via the at least one indication.

3. The apparatus of any previous claim, wherein at least one indication is indicative of whether one or more L1-SINR measurements, for respective one or more beams, of the first group of L1-SINR measurements are within a threshold difference of the one or more beam's respective L1-SINR measurements for the second group of beams.

4. The apparatus of any previous claim, wherein the L1-SINR measurements for the first group of beams comprise a first set of first measurement values of inter beam interference for each beam of the first group of beams due to the other beams of the first group of beams; and
wherein the L1-SINR measurements for the second group of beams comprise a second set of second measurement values of inter beam interference for each beam of the second group of beams due to the other beams of the second group of beams.

5. The apparatus of any previous claim, wherein the at least one indication is indicative of whether one or more second L1-SINR measurement values for one or more beams can be represented by one or first L1-SINR measurement values for the respective one or more beams.

6. The apparatus of any previous claim, further comprising means for determining a beam, of the first group of beams, which has a first L1-SINR measurement with inter beam interference from the other beams of the first group of beams that is within a threshold difference of a second L1-SINR measurement for the beam with inter beam interference from the other beams of the second group of beams; and
wherein the at least one indication is indicative of whether the first L1-SINR measurement for the determined beam can be used as the second L1-SINR measurement for the determined beam.

7. The apparatus of any previous claim, wherein the at least one measurement report comprises a second group of L1-SINR measurements for the second group of beams; and wherein at least one of the L1-SINR measurements for the second group of beams is represented by the at least one indication.

8. The apparatus of claim 7, wherein the second group of L1-SINR measurements of the at least one measurement report comprises:
the at least one indication for representing the at least one of the L1-SINR measurements for the second group of beams; and
at least one L1-SINR measurement value for at least one the L1-SINR measurements for the second group of beams.

9. The apparatus of any previous claim, further comprising means for determining a beam, of the first group of beams, which has a first L1-SINR measurement with inter beam interference from the other beams of the first group of beams that exceeds a threshold difference of a second L1-SINR measurement for the beam with inter beam interference from the other beams of the second group of beams;
wherein the second L1-SINR measurement for the determined beam is represented in the at least one measurement report via an L1-SINR measurement value for the determined beam.

10. The apparatus of any previous claim, wherein the at least one indication is indicative of whether at least one of:
a plurality of L1-SINR measurements of the first group of L1-SINR measurements can be used as a plurality of L1-SINR measurements for the second group of beams; and
the L1-SINR measurements from the first group of L1-SINR measurements for beams of the second group of beams can be used as the L1-SINR measurements for the second group of beams.

11. The apparatus of any previous claim, wherein the first group of beams comprises a plurality of subgroups of beams, and wherein the at least one indication is indicative of whether L1-SINR measurements from the first group of L1-SINR measurements can be used as L1-SINR measurements for the plurality of subgroups of beams.

12. The apparatus of any previous claims, wherein the at least one indication is indicative of whether L1-SINR measurements from the first group of L1-SINR measurements for the beams of the second group of beams can be used as the L1-SINR measurements for the second group of beams, and
wherein the at least one indication is implicitly provided by configuring the at least one measurement report so as to:
report the first group of L1-SINR measurements for a first group of beams, and
not report the second group of L1-SINR measurements for the second group of beams.

13. The apparatus of any previous claim, further comprising means for receiving, from the access node, information indicative of a parameter for use in determining whether the one or more L1-SINR measurements of the first group of L1-SINR measurements can be used as the one or more L1-SINR measurement for the second group of beams.

14. The apparatus of any previous claim, wherein the at least one measurement report further comprises one or more additional indications for indicating which one or more beams of the first group of beams causes the one or more greatest levels of inter beam interference with a given beam of the first group of beams.

15. The apparatus of any previous claim, wherein the at least one measurement report further comprises, for each beam of the first group of beams, one or more additional indications for indicating which one or more beams of the first group of beams causes one or more greatest levels of inter beam interference with said beam.

16. The apparatus of any previous claim, wherein the at least one measurement report further comprises at least one further indication for at least one of:
indicating which pair of beams of a group of beams has a greatest level of inter beam interference; and
indicating which pair of beams of a group of beams has a lowest level of inter beam interference.

17. The apparatus of any previous claim, further comprising:
means for transmitting, to an access node, capability information indicative of whether the apparatus is capable of performing GBBR of L1-SINR measurements using the at least one measurement report.

18. An apparatus comprising:
means for sending, to a User Equipment, UE, configuration information for enabling the UE to:
perform Group-Based Beam Reporting, GBBR, of Layer 1 signal-to-interference-plus-noise ratio, L1-SINR measurements, and
generate at least one measurement report for the GBBR of the L1-SINR measurements, wherein the at least one measurement report comprises:
a first group of L1-SINR measurements for a first group of beams, and
at least one indication of whether one or more L1-SINR measurements of the first group of L1-SINR measurements can be used as one or more L1-SINR measurements of a second group of L1-SINR measurements for a second
group of beams;
means for receiving, from the UE, the at least one measurement report; and
means for selecting, based at least in part on the at least one measurement report, one or more of the beams of the first group of beams for use in communicating with the UE.
